# EUROPEAN PATENT APPLICATION

(11) **EP 4 779 110 A1**
(43) Date of publication of application: **22.07.2026**
(21) Application number: 24878984.4
(22) Date of filing: 15.10.2024
(51) Int. Cl.: E04H 12/24, E04H 12/00, H01B 17/16, H02G 7/00

(54) **TRANSMISSION TOWER**

(30) Priority: 17.10.2023 CN 202322788878 U
(71) Applicant: Shanghai Shemar Power Engineering Co., Ltd., Shanghai 200050 (CN)
(72) Inventor: WANG, Xinlong, Shanghai 200050 (CN); WANG, Chen, Shanghai 200050 (CN); LI, Yanlin, Shanghai 200050 (CN)
(74) Representative: Mewburn Ellis LLP
(86) International application number: PCT/CN2024/124889
(87) International publication number: WO 2025/082341

(57) **Abstract**

A transmission tower (10), comprising a tower body (11) and composite crossarms (100) arranged on the tower body (11). Each composite crossarm (100) comprises at least one post insulator (110). A low-voltage end (110a) of the post insulator (110) is connected to the tower body (11), and a high-voltage end (110b) of the post insulator (110) is provided with an end fitting. The end fitting is provided with a conductor hanging point for hanging a one-phase conductor. At least six composite crossarms (100) are provided so as to form at least six conductor hanging points for hanging at least double-circuit conductors. The transmission tower can reduce the width of line corridors, reduce the tower height, improve the transmission capacity of the tower body, and enhance the line reliability.

## Description

### TECHNICAL FIELD

The present application relates to the field of power transmission technologies, and in particular, to a transmission tower.

### BACKGROUND

In a conventional intermediate support for a transmission line, conductors are suspended by iron crossarms and insulator strings, and in order to satisfy electric clearances, a tower head of the conventional support, in particular to the support for attaching multi-circuit conductors, has a large size, but an intermediate support with composite crossarms is not only suitable for the multi-circuit conductors, but has a compact structure of the tower head and a large power transmission capacity, has good economic and technical effects, and therefore, the intermediate support with composite crossarms is of great significance for a development of a transmission project.

### SUMMARY

In order to address the above technical problem, the technical solution adopted by the present application is as follows: a transmission tower includes a tower body and a composite crossarm arranged on the tower body. The composite crossarm includes at least one post insulator, a low-voltage end of the at least one post insulator being connected to the tower body. A high-voltage end of the at least one post insulator is provided with an end fitting. The end fitting is provided with a conductor attaching point configured for attaching one-phase conductor. At least six composite crossarms are provided to form at least six conductor attaching points for attaching at least two-circuit conductors.

In an embodiment, the end fitting is provided with a conductor attaching portion. The conductor attaching portion is connected to a conductor attaching fitting string and configured to form the conductor attaching point.

In an embodiment, the composite crossarm further includes at least one suspension insulator. A high-voltage end of the at least one suspension insulator is fixedly connected to the high-voltage end of the at least one post insulator through the end fitting, and a low-voltage end of each of the at least one suspension insulator is fixedly connected to the tower body above a respective one of the at least one post insulator.

In an embodiment, the end fitting includes: a flange cylinder axially configured as a hollow structure in its axial direction, and sleeved on the high-voltage end of the at least one post insulator; and a sealing plate sealing an end portion of the flange cylinder away from the at least one post insulator.

In an embodiment, the conductor attaching portion is a conductor attaching hole. The conductor attaching hole is formed in the sealing plate and configured to be connected with the conductor attaching fitting string.

In an embodiment, the conductor attaching portion is a plate member structure. The conductor attaching portion is perpendicularly arranged on a plate surface of the sealing plate away from the flange cylinder. A conductor attaching hole is formed in the conductor attaching portion and configured to be connected with the conductor attaching fitting string.

In an embodiment, the conductor attaching portion is a plate member structure. The conductor attaching portion is perpendicularly arranged on a plate surface of the sealing plate adjacent to the flange cylinder and also connected to an outer circumferential surface of the flange cylinder. A conductor attaching hole is formed in the conductor attaching portion and configured to be connected with the conductor attaching fitting string.

In an embodiment, the end fitting further includes a connector. The connector is located on an outer circumferential surface of the flange cylinder and configured to be connected to the at least one suspension insulator.

In an embodiment, the transmission tower further includes: a connecting lug fixed on the tower body, and the low-voltage end of a respective one of the at least one suspension insulator being connected to the connecting lug through a first suspension connecting fitting and connected to the tower body; a tower body flange cylinder fixed on the tower body; and a tower body flange plate, one end of the tower body flange plate being connected to the tower body flange cylinder, and another end of the tower body flange plate being in butt connection to a flange plate arranged at the low-voltage end of the at least one post insulator, so as to connect the at least one post insulator and the tower body.

In an embodiment, the high-voltage end of the at least one post insulator is further provided with a grading ring. The grading ring is connected to the end fitting.

In an embodiment, the composite crossarm includes two post insulators and two suspension insulators. The two suspension insulators are located on a same side of the two post insulators and are respectively adjacent to the two post insulators. Moreover, an included angle between the two post insulators ranges from 20° to 50°, and an included angle between each post insulator and an adjacent one of the suspension insulators ranges from 15° to 45°.

In an embodiment, the end fitting includes: a post connecting plate provided with a post connecting hole and configured to be connected to the post insulators; a suspension connecting plate located on the post connecting plate and configured to be connected to a respective one of the suspension insulators; and a reinforcing member connected to both the post connecting plate and the suspension connecting plate.

In an embodiment, the reinforcing member is a plate member structure, and the post connecting plate is arranged perpendicular to the reinforcing member.

In an embodiment, the reinforcing member is cylindrical, and a side edge of the post connecting plate abuts against an outer circumferential surface of the reinforcing member.

In an embodiment, the low-voltage end of each of the suspension insulators is connected to the tower body through a second suspension connecting fitting. The low-voltage end of each of the post insulators is provided with an end flange. The end flange includes an end flange cylinder that is sleeved on an end portion of a respective one of the post insulators and at least two end flange plates. The at least two end flange plates are spaced apart along a circumferential direction of the end flange cylinder and connected to the end flange cylinder, and configured to connect the respective one of the post insulators and the tower body.

In an embodiment, two composite crossarms are arranged at a same height on the tower body. The two composite crossarms are distributed axisymmetrically with respect to an axis of the tower body. The two composite crossarms have axes located on a same straight line to form a composite crossarm assembly. Three composite crossarm assemblies are sequentially arranged on the tower body from top to bottom to attach two-circuit conductors.

In an embodiment, two composite crossarms are arranged at a same height on the tower body. The two composite crossarms are distributed axisymmetrically with respect to an axis of the tower body. The two composite crossarms have axes located on a same straight line to form a composite crossarm assembly. Six composite crossarm assemblies are sequentially arranged on the tower body from top to bottom to attach four-circuit conductors.

In an embodiment, the transmission tower is a tower carrying circuits of a same voltage level. Composite crossarms with a same voltage level are sequentially arranged on the tower body from top to bottom to attach transmission lines with a same voltage level.

In an embodiment, the transmission tower is a tower carrying circuits of mixed voltage levels. Composite crossarms with different voltage levels are sequentially arranged on the tower body from top to bottom to attach transmission lines with different voltage levels.

In an embodiment, the tower body is an angle steel tower or a steel pipe pole.

The present application has the following beneficial effects: 1) insulator strings are saved, wind deflection flashover are avoided, and a width of a line corridor is reduced; 2) a spacing between the layers of conductors is reduced, a size of a tower head is reduced, and electric field distribution and an electromagnetic environment of the support are improved; 3) a load effect of the conductor and a wind load on the tower head are reduced, and a tower weight and a foundation acting force are reduced; 4) an icing degree and a wind-exposed area of the transmission support are reduced, and a risk of the support collapse accidents is reduced.

### BRIEF DESCRIPTION OF THE DRAWINGS

In order to illustrate the technical solutions in the embodiments of the present application more clearly, the drawings required for describing the embodiments will be described below briefly. Apparently, the following described drawings are merely for some embodiments of the present application, and other drawings can be derived from these drawings by those of ordinary skill in the art without any creative effort. In which:
FIG. 1 is a schematic structural view of a transmission tower 10 according to an embodiment of the present application;
FIG. 2 is an enlarged view of portion A in FIG. 1;
FIG. 3 is a schematic structural view of a first end fitting 120 in an embodiment of the present application;
FIG. 4 is a schematic structural view of the transmission tower 10 according to another embodiment of the present application;
FIG. 5 is an enlarged view of portion B in FIG. 4;
FIG. 6 is a schematic perspective view of a second end fitting 140 in an embodiment of the present application;
FIG. 7 is a top view of the second end fitting 140 in an embodiment of the present application;
FIG. 8 is a schematic structural view of the second end fitting 140 in another embodiment of the present application;
FIG. 9 is a schematic structural view of the first end fitting 120 in another embodiment of the present application;
FIG. 10 is a schematic structural view of the first end fitting 120 in still another embodiment of the present application;
FIG. 11 is a schematic enlarged view of a joint between a suspension insulator 130 and a tower body 11 in an embodiment of the present application;
FIG. 12 is a schematic enlarged view of a joint between a post insulator 110 and the tower body 11 in an embodiment of the present application;
FIG. 13 is a schematic enlarged view of the joint between the suspension insulator 130 and the tower body 11 in another embodiment of the present application;
FIG. 14 is a schematic enlarged view of the joint between the post insulator 110 and the tower body 11 in another embodiment of the present application;
FIG. 15 is a schematic enlarged view of the joint between the suspension insulator 130 and the tower body 11 in still another embodiment of the present application;
FIG. 16 is a schematic enlarged view of the joint between the post insulator 110 and the tower body 11 in still another embodiment of the present application.

### DETAILED DESCRIPTION

The technical solutions in the embodiments of the present application are clearly and completely described with reference to the accompanying drawings in the embodiments of the present application, and apparently, the described embodiments are not all but only a part of the embodiments of the present application. All other embodiments obtained by a person of ordinary skill in the art based on the embodiments of the present application without creative efforts shall fall within the protection scope of the present application.

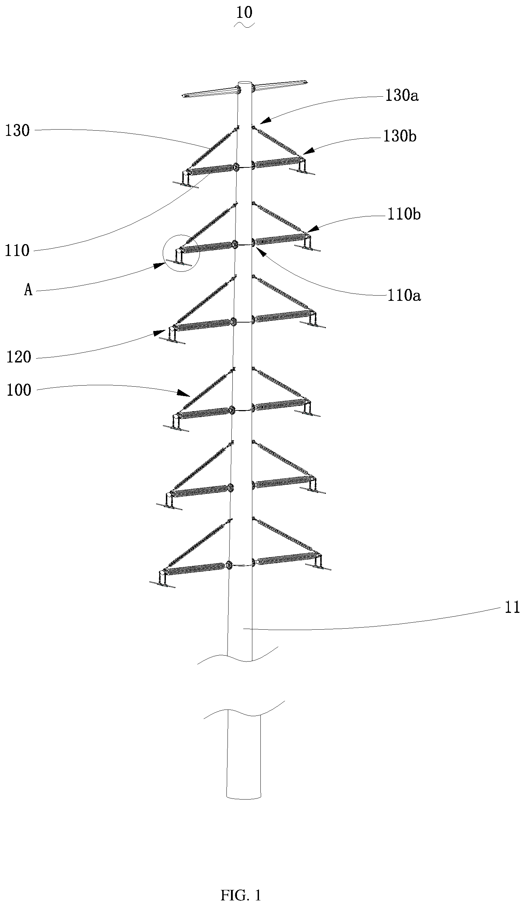

Referring to FIG. 1, a transmission tower 10 includes a tower body 11 and composite crossarms 100 arranged on the tower body 11. The composite crossarm 100 includes at least one post insulator 110. A low-voltage end 110a of the post insulator 110 is connected to the tower body 11, and a high-voltage end 110b of the post insulator 110 is provided with an end fitting. The end fitting is provided with a conductor attaching point for attaching one-phase conductor. The transmission tower 10 according to the present application can reduce a width of a line corridor, reduce a height of the tower, improve a transmission capacity of the tower body and enhance reliability of a line.

The tower body 11 can be a transmission tower of a common structure such as a lattice iron tower, a steel pipe pole or a composite support. The composite crossarm 100 can be arranged on one side of the tower body 11, or the composite crossarms 100 can be arranged on multiple sides of the tower body 11. In an embodiment, twelve composite crossarms 100 (as shown in FIG. 1) are symmetrically arranged on two sides of the tower body 11, six composite crossarms 100 are spaced apart along a vertical direction on one side of the tower body 11, and six composite crossarms 100 are symmetrically arranged on another side of the tower body, so as to form twelve conductor attaching points for attaching four-circuit conductors.

In an embodiment, the composite crossarm 100 includes one post insulator 110 and one suspension insulator 130. The high-voltage end 110b of the post insulator 110 and a high-voltage end 130b of the suspension insulator 130 are connected together by the end fitting, where the end fitting is a first end fitting 120. The low-voltage end 110a of the post insulator 110 and a low-voltage end 130a of the suspension insulator 130 are respectively connected to two different positions of the tower body 11, the low-voltage end 110a of the post insulator 110 and the low-voltage end 130a of the suspension insulator 130 are located on a same vertical line, and in this case, the composite crossarm 100 is in a stable triangular structure, which can ensure stability of the composite crossarm 100. The suspension insulator 130 is located above the post insulator 110.

Still referring to FIG. 1 to FIG. 3, FIG. 9 and FIG. 10, the first end fitting 120 includes a flange cylinder 122 and a sealing plate 123. The flange cylinder 122 is configured as a hollow structure in its axial direction, and is sleeved on the high-voltage end 110b of the post insulator 110. The sealing plate 123 seals an end portion of the flange cylinder 122 away from the post insulator 110, so as to prevent moisture, impurities, or the like, from entering the post insulator 110. The sealing plate 123 may be a circular plate member or a special-shaped plate member. The first end fitting 120 is provided with at least one conductor attaching portion 124. The conductor attaching portion 124 is connected to a conductor attaching fitting string 125 and configured to form the conductor attaching point to attach the conductor. The conductor attaching portion 124 may be arranged directly on the sealing plate 123, or may be connected to both the sealing plate 123 and the flange cylinder 122.

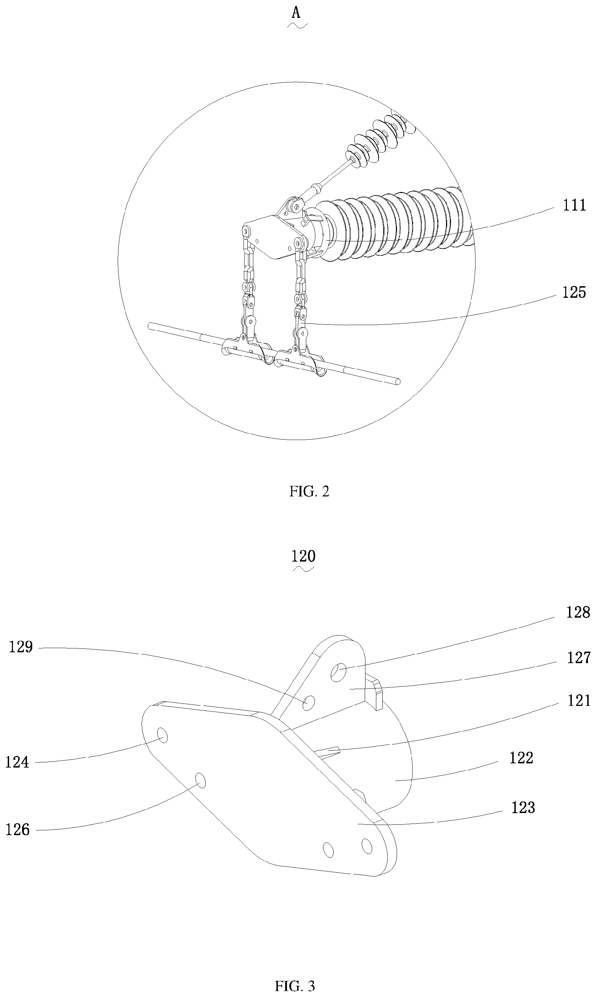

In an embodiment, with reference to FIG. 2 and FIG. 3, the conductor attaching portion 124 is specifically a conductor attaching hole formed in the sealing plate 123. In this embodiment, two conductor attaching holes 124 are spaced apart along an extending direction of the conductors, each of the two conductor attaching holes 124 is provided therein with the conductor attaching fitting string 125. Stress on the first end fitting 120 is balanced after the conductor(s) is attached onto the two conductor attaching fitting strings 125, the attached conductors are more stable, and safety is higher. In other embodiments, one, three or more conductor attaching holes may be provided, as long as mechanical strength for attaching the conductors can be satisfied, which is not limited herein. Two first construction holes 126 are further formed in the sealing plate 123 for construction and maintenance.

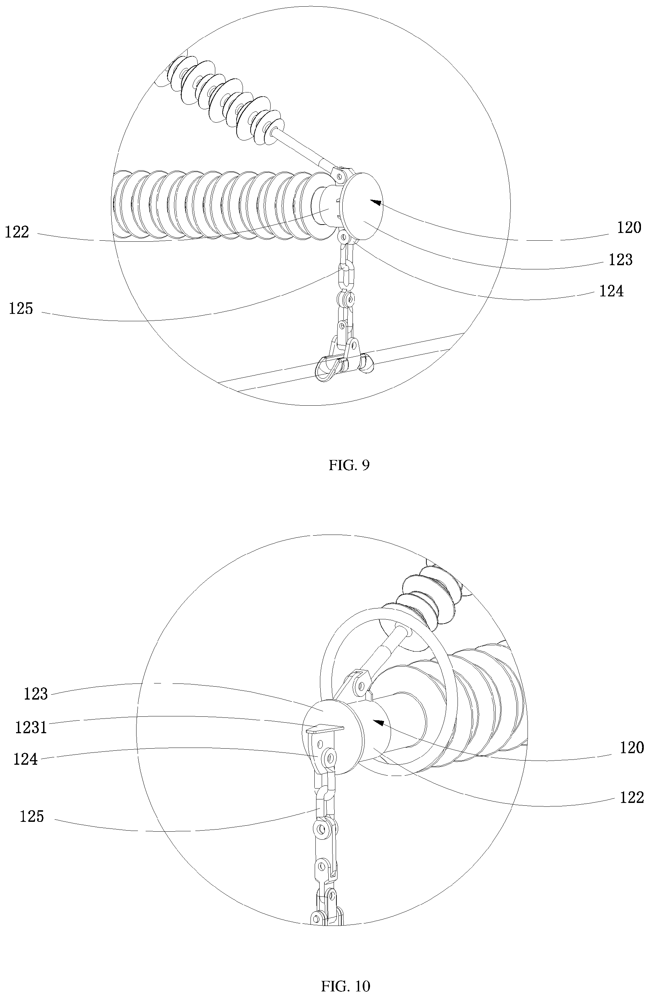

Referring to FIG. 9, in another embodiment, the conductor attaching portion 124 is a plate member structure, and is perpendicularly arranged on a plate surface of the sealing plate 123 adjacent to the flange cylinder 122 and also connected to an outer circumferential surface of the flange cylinder 122. A plate surface of the conductor attaching portion 124 is perpendicular to the plate surface of the sealing plate 123 and extends outwards from the outer circumferential surface of the flange cylinder 122 along a radial direction of the flange cylinder 122. A conductor attaching hole is formed in the conductor attaching portion 124. The conductor attaching hole has an extending direction perpendicular to a direction of the plate surface of the conductor attaching portion 124, and is configured to be connected to the conductor attaching fitting string 125 to attach the conductor. When the composite crossarm 100 is mounted on the tower body 11, the conductor attaching portion 124 is arranged vertically, so that stress thereon is balanced after the conductor is attached.

In still another embodiment, referring to FIG. 10, the conductor attaching portion 124 is a plate member structure. One side of the conductor attaching portion 124 is fixedly connected to a plate surface of the sealing plate 123 away from the flange cylinder 122, and a plate surface of the conductor attaching portion 124 is perpendicular to the plate surface of the sealing plate 123, so that stress thereon is more uniform after the conductor is attached subsequently. A conductor attaching hole is formed in the conductor attaching portion 124, and the conductor attaching hole has an extending direction perpendicular to a direction of the plate surface of the conductor attaching portion 124, and is configured to be connected to the conductor attaching fitting string 125 to attach the conductor. In an application scenario, an auxiliary reinforcing plate 1231 is further connected between a side of the conductor attaching portion 124 and the sealing plate 123. The auxiliary reinforcing plate 1231 is a plate member. The sealing plate 123, the conductor attaching portion 124 and the auxiliary reinforcing plate 1231 are pairwise perpendicular. With the arrangement of the auxiliary reinforcing plate 1231, it can enhance the stability of a connecting structure between the sealing plate 123 and the conductor attaching portion 124, and prevent breakage caused by insufficient connecting strength of the conductor attaching portion 124 and the sealing plate 123. When the composite crossarm 100 is mounted on the tower body 11, the conductor attaching portion 124 is arranged in a vertical direction, so that stress thereon is balanced after the conductoris attached; the auxiliary reinforcing plate 1231 is arranged in a horizontal direction, so that the connection between the sealing plate 123, the conductor attaching portion 124 and the auxiliary reinforcing plate 1231 is more stable. The conductor attaching portion 124 is further provided with a construction hole for construction, operation and maintenance of the composite crossarm 100.

Still referring to FIG. 3, the first end fitting 120 further includes a connector 127. The connector 127 is located on an outer circumferential surface of the flange cylinder 122 and configured to be connected to the suspension insulator 130. The connector 127 is connected to both the outer periphery of the flange cylinder 122 and the sealing plate 123, thus enhancing stability of the connector 127.

At least one suspension connecting hole 128 is formed in the connector 127, and the suspension connecting hole 128 is configured to be connected with the suspension insulator 130. The connector 127 can be further provided with a second construction hole 129 for hoisting the composite crossarm 100 to facilitate mounting. In this embodiment, one suspension connecting hole 128 and one second construction hole 129 are provided, and in other embodiments, according to actual working conditions, two or more suspension connecting holes and two or more second construction holes may be provided, or the second construction hole may not be provided, which is not limited herein. A reinforcing plate 121 is further arranged between the flange cylinder 122 and the sealing plate 123, and the reinforcing plate 121 is connected to both the plate surface of the sealing plate 123 and the outer circumferential surface of the flange cylinder 122, so that the first end fitting 120 has a more stable structure.

Referring to FIG. 2, the high-voltage end 110b of the post insulator 110 is further provided with a grading ring 111. The grading ring 111 is connected to the first end fitting 120. The arrangement of the grading ring 111 can achieve a good uniform electric field effect.

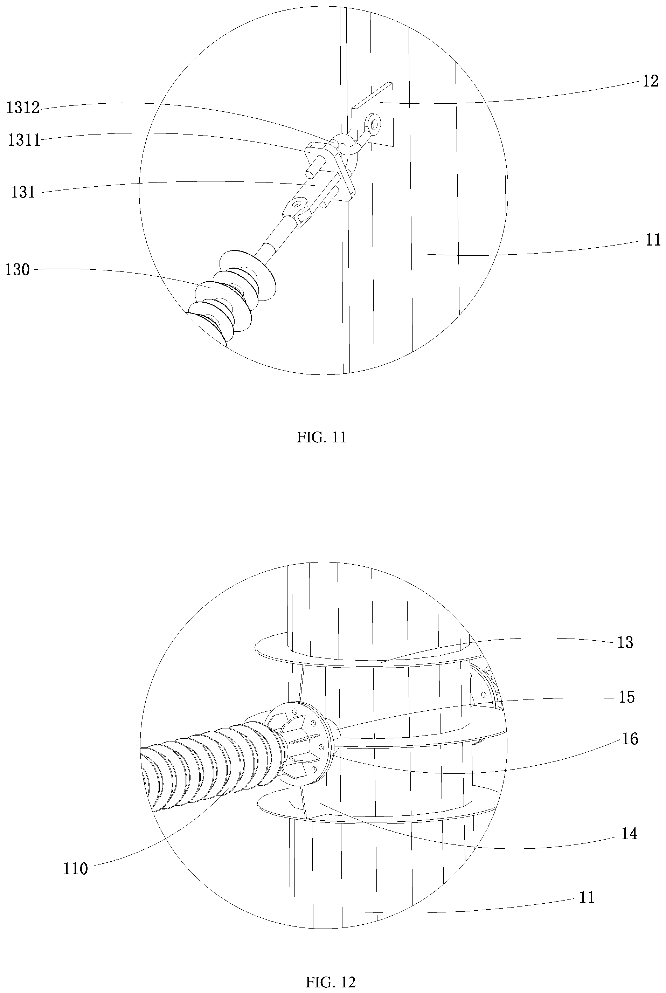

In an embodiment, referring to FIG. 11, in order to facilitate mounting of the suspension insulator 130 onto the tower body 11, the transmission tower 10 further includes a connecting lug 12. The connecting lug 12 is fixed on the tower body 11. The low-voltage end 130a of the suspension insulator 130 is connected to the connecting lug 12 through a first suspension connecting fitting 131 and thereby connected to the tower body 11. The connecting lug 12 is a thin plate, a connecting hole is formed in the connecting lug 12. The first suspension connecting fitting 131 includes a T-shaped plate 1311 and a U-shaped fastener 1312. One end of the T-shaped plate 1311 is provided with two through holes corresponding to and matched with the U-shaped fastener 1312, another end of the T-shaped plate 1311 is connected to the suspension insulator 130. The U-shaped fastener 1312 passes through the two through holes to be fixedly connected to the T-shaped plate 1311, and is then respectively matched and connected with the connecting hole in the connecting lug 12 through a U-shaped ring, so that the suspension insulator 130 and the tower body 11 are fixedly connected.

Referring to FIG. 12, in order to facilitate mounting of the post insulator 110 on the tower body 11, the transmission tower 10 further includes a tower body flange cylinder 15 and a tower body flange plate 16 that are fixed on the tower body 11. The tower body flange plate 15 has one end connected to the tower body flange cylinder 15, and another end that is in butt connection to a flange plate arranged at the low-voltage end of the post insulator 110, so as to connect the post insulator 110 and the tower body 11. In an application scenario, the transmission tower 10 further includes reinforcing rings 13 and tower body reinforcing ribs 14. The reinforcing ring 13 is sleeved on the outside of tower body 11. Three reinforcing rings 13 are spaced apart in an extending direction of the tower body 11. The reinforcing ring 13 located in the middle is connected to an outer circumferential surface of the tower body flange cylinder 15 and configured to reinforce structural strength of the tower body flange cylinder 15. The tower body reinforcing ribs 14 are arranged in two spacings formed by the three reinforcing rings 13, that is, two ends of the tower body reinforcing rib 14 are respectively connected to the reinforcing ring 13 located in the middle and either of the reinforcing rings 13 located at the ends. At least one tower body reinforcing rib 14 is simultaneously connected to the tower body flange cylinder 15 and the tower body flange plate 16, so as to enhance structural stability of the tower body flange cylinder 15 and the tower body flange plate 16. Meanwhile, a side wall of the tower body reinforcing rib 14 is attached to the tower body 11, thereby further indirectly increasing a contact area between the tower body flange cylinder 15 and the tower body 11, and guaranteeing connecting strength of the tower body flange cylinder 15 and the tower body 11. In other embodiments, one reinforcing ring may be provided, this reinforcing ring is connected to the outer circumferential surface of the tower body flange cylinder. Certainly, the reinforcing ring may be provided according to specific requirements as long as structural stability of the tower body 11 can be ensured.

The reinforcing rings 13 and the tower body reinforcing ribs 14 may be fixedly connected to the tower body flange cylinder 15 and the tower body flange plate 16 by welding, or the like, and certainly, these components may be integrally formed, which is not limited herein.

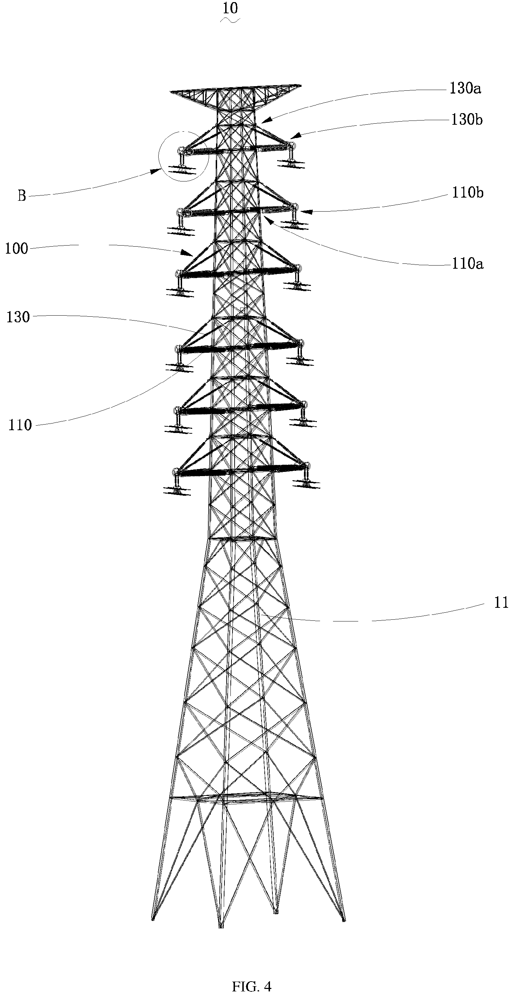

In still another embodiment, referring to FIG. 4 to FIG. 7, the composite crossarm 100 includes two post insulators 110 and two suspension insulators 130. The high-voltage ends 110b of the two post insulators 110 and the high-voltage ends 130b of the two suspension insulators 130 are connected together by an end fitting. The end fitting is a second end fitting 140. The low-voltage ends 110a of the two post insulators 110 and the low-voltage ends 130a of the two suspension insulators 130 are respectively connected to the tower body 11. Meanwhile, the two suspension insulators 130 are located on the same side of the two post insulators 110 and are respectively adjacent to the two post insulators 110, and an included angle between the two post insulators 110 ranges from 20° to 50°, for example, is 20°, 30°, 40°, 45° or 50°. An included angle between the post insulator 110 and the suspension insulator 130 adjacent thereto ranges from 15° to 45°, for example, is 15°, 30° or 45°. Given that a larger angle between the two post insulators 110 allows the composite crossarm 100 to withstand greater mechanical strength, but also requires a length of the composite crossarm 100 and a width of the tower body 11 to be increased accordingly, so the included angle between the two post insulators 110 is controlled to range from 20° to 50°, which meets a stress requirement of the composite crossarm 100, and also optimizes the length of the composite crossarm 100 and the width of the tower body 11. Similarly, the same purpose can be achieved by controlling the included angle between the post insulator 110 and the adjacent suspension insulator 130 to range from 15° to 45°. The arrangement of the two post insulators 110 and the two suspension insulators 130 causes the composite crossarm 100 and the tower body 11 to have a stable triangular structure, and stability of the composite crossarm 100 can be greatly improved.

The second end fitting 140 includes a post connecting plate 141, two suspension connecting plates 142 and a reinforcing member. The post connecting plate 141 includes a first plate surface 146 and a second plate surface 147 which are opposite to each other. The two suspension connecting plates 142 are arranged on the first plate surface 146. The post connecting plate 141 and the two suspension connecting plates 142 are all connected to the reinforcing member, in a connecting manner of welding, and certainly, other connecting forms such as integral casting molding and fastener connecting can be adopted. In this embodiment, the reinforcing member is a plate member structure, that is, the reinforcing member is a reinforcing plate 144. End surfaces of the post connecting plate 141 and the suspension connecting plates 142 located on the same side are connected to a plate surface of the reinforcing plate 144 at the same time, the post connecting plate 141 is arranged perpendicular to the reinforcing plate 144. In other embodiments, the post connecting plate and the reinforcing plate can be arranged at other angles.

In this embodiment, the first plate surface 146 is of a pentagonal structure with rounded corners, and the pentagonal structure has an axisymmetric shape with a dotted line L as its symmetry axis. An intersection line of the first plate surface 146 and the reinforcing plate 144 is denoted as K. The dotted line L is a projection of a plane perpendicular to both the first plate surface 146 and the reinforcing plate 144 on the first plate surface 146. The dotted line L passes through a midpoint of the intersection line K. As such, the second end fitting 140 has an axisymmetric shape about the dotted line L. The dotted line L is not actually present and is used herein only for convenience of description. In other embodiments, the first plate surface may have a rectangular structure or other structures, which is not limited herein.

In this embodiment, the post connecting plate 141 is provided with a plurality of post connecting holes 145 configured for being connected with the post insulators 110, and if two post insulators 110 are provided, the plurality of post connecting holes 145 are distributed axisymmetrically with respect to the dotted line L. Meanwhile, the number and distribution of the post connecting holes 145 located on one side of the dotted line L are set according to the number and distribution of mounting holes in the post insulators 110. In other embodiments, if one post insulator is provided, the post connecting holes are arranged in the middle of the post connecting plate. In short, the post connecting holes are uniformly distributed according to the number of the post insulators, which ensures a stress balance on the post connecting plate to prolong a service life of the second end fitting. The arrangement of the post connecting hole 145 replaces a connection between a conventional crossarm fitting and the post insulator through a flange plate, thus greatly reducing a complex structure and weight of the crossarm fitting and facilitating mounting and dismounting.

In this embodiment, the suspension connecting plates 142 are located on the post connecting plate 141 and configured to be connected to the suspension insulators 130. Since two suspension insulators 130 are provided, two suspension connecting plates 142 are provided. The two suspension connecting plates 142 are distributed axisymmetrically with respect to the dotted line L, and each suspension connecting plate 142 is provided with one suspension connecting hole 148 for being connected with the suspension insulator 130. In other embodiments, only one suspension connecting plate may be provided, and the suspension connecting plate is located in the middle of the post connecting plate. That is, the suspension connecting plates are uniformly distributed according to the number of the suspension insulators, which ensures a stress balance on the whole second end fitting to prolong the service life of the second end fitting. That is, the second connecting fitting 140 may be used for the composite crossarm 100 in FIG. 1, which is not limited herein.

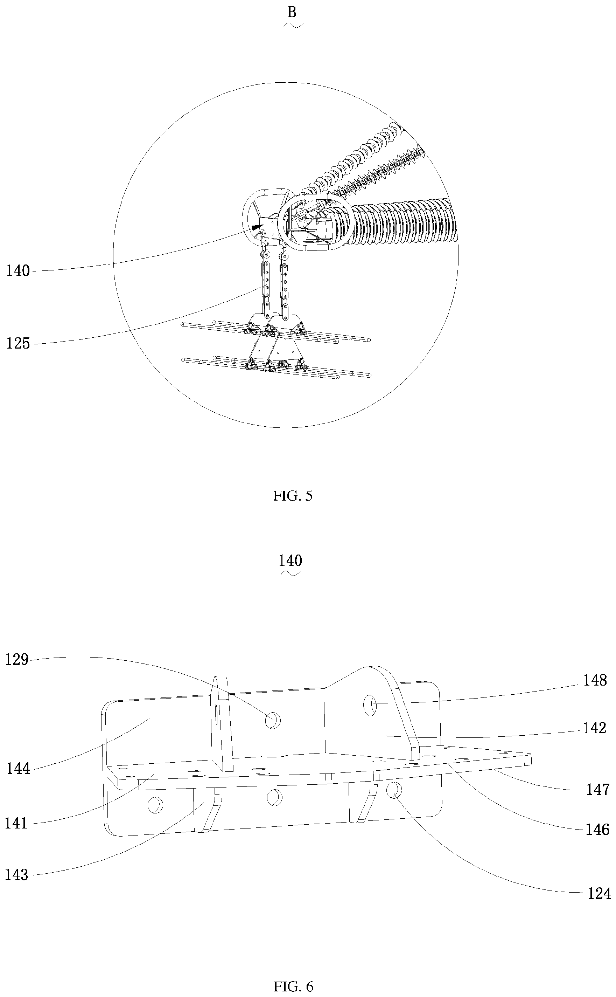

The reinforcing plate 144 is connected to both the post connecting plate 141 and the suspension connecting plate 142, so that the whole second end fitting 140 has a stable structure. The reinforcing plate 144 is provided with at least one conductor attaching portion 124. A conductor attaching fitting string 125 is arranged on the conductor attaching portion 124 and configured to form the conductor attaching point to attach the conductor. In this embodiment, the conductor attaching portion 124 is specifically configured as two conductor attaching holes, and the two conductor attaching holes are axisymmetrically distributed with respect to the midpoint of the intersection line K, so that stress on the second end fitting 140 is balanced after the conductors are attached, the attached conductors are more stable, and safety is higher. In other embodiments, three or more conductor attaching holes may be provided, as long as mechanical strength for attaching the conductors can be satisfied, which is not limited herein. In this embodiment, as shown in FIG. 5, the conductor attaching fitting string is a four-conductor attaching fitting string, specifically a plate member provided with four clamp attaching points. The plate member can be connected to four clamps to attach a four-conductor bundle. Two conductor attaching fitting strings are provided. The two conductor attaching fitting strings are respectively connected to the two conductor attaching portions 124 arranged at two ends of the reinforcing plate 144 so that the reinforcing plate 144 is subjected to uniform stress.

In other embodiments, the conductor attaching fitting string may be of other structures, or other numbers of conductor attaching fitting strings may be provided. The conductor attaching fitting string may be provided with other numbers of clamps to attach bundles with different numbers of conductors, as long as distribution of the clamps and overall stress on the second end fitting 140 are uniform and reasonable. No limitations are imposed here, which can broaden the application range of the transmission tower. In an application scenario, the conductor attaching fitting string is a three-conductor attaching fitting string, specifically a T-shaped plate member. Three end portions of the T-shaped plate member are respectively provided with clamp attaching points, and three clamps can be connected to attach a three-conductor bundle. In another application scenario, the conductor attaching fitting string is a two-conductor attaching fitting string, specifically a triangular yoke plate. One of corners of the triangular yoke plate is configured to be connected to the reinforcing plate 144, the other two corners are respectively provided with clamp attaching points, and two clamps can be connected to attach a two-conductor bundle. In still another application scenario, the conductor attaching fitting string can be directly a suspension clamp. A single conductor is suspended through the suspension clamp.

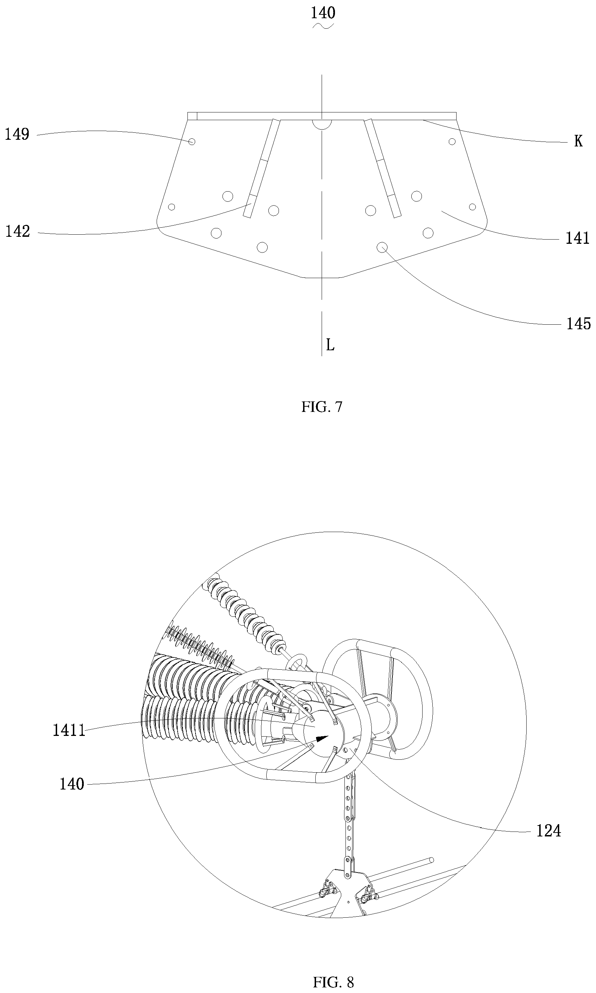

With reference to FIG. 8, in another embodiment, the reinforcing member is cylindrical, that is, the reinforcing member is a connecting post 1411. That is, the second end fitting 140 includes a post connecting plate, two suspension connecting plates and the connecting post 1411. Specific configurations and mutual connecting relationships between the post connecting plate and the suspension connecting plates are the same as those of the post connecting plate 141 and the suspension connecting plates 142 in the foregoing embodiments, and reference can be made to the foregoing embodiments for details, which are not repeatedly described herein.

A side edge of the post connecting plate abuts against an outer circumferential surface of the connecting post 1411. The high-voltage ends 110b of the two post insulators 110 are mounted on the post connecting plate and spaced apart along an axial direction of the connecting post 1411. Two suspension connecting plates are provided. The two suspension connecting plates are arranged on a same side of the post connecting plate and respectively configured for the mounting of the high-voltage ends 130b of the two suspension insulators 130.

Still referring to FIG. 8, in order to facilitate attaching the conductor, the connecting post 1411 is provided with a conductor attaching portion 124. The conductor attaching portion 124 is located on another side of the post connecting plate away from the suspension connecting plate and extends outwards along a radial direction of the connecting post 1411 on the outer circumferential surface of the connecting post 1411. Two conductor attaching portions 124 are provided. The two conductor attaching portions 124 are spaced apart along the axial direction of the connecting post 1411. The conductor attaching portion 124 is a plate member structure. When the composite crossarm 100 is mounted on the tower body 11, the conductor attaching portion 124 is arranged vertically, so that stress thereon is balanced after the conductor is attached.

The post connecting plate, the suspension connecting plate, the connecting post 1411 and the conductor attaching portion 124 are connected to each other, in a connecting manner of welding, and certainly, other connecting forms such as integral casting molding and fastener connecting can be adopted.

Referring to FIG. 4 to FIG. 7, the second end fitting 140 further includes a support plate 143. The support plate 143 is arranged on the second plate surface 147 of the post connecting plate 141. The support plate 143 is perpendicularly connected to both the post connecting plate 141 and the reinforcing plate 144. In this embodiment, two support plates 143 are provided, which fixedly support the reinforcing plate 144, so that the stress on the whole second end fitting 140 is balanced, and mechanical strength of the whole second end fitting 140 is improved. In other embodiments, only one support plate may be provided, and this support plate is located in the middle of the post connecting plate, or three or more support plates may be provided, as long as the mechanical strength of the whole second end fitting can be improved, which is not limited herein.

The post connecting plate 141 is further provided with a plurality of mounting holes 149. The mounting holes 149 are axisymmetrically distributed with respect to the dotted line L. The mounting holes 149 are located at an edge of the post connecting plate 141 and configured to be connected with a shielding ring. The reinforcing plate 144 is further provided with a second construction hole 129 for hoisting the composite crossarm 100, which facilitates mounting. In this embodiment, one second construction hole 129 is provided, and in other embodiments, two or more second construction holes may be provided, which depends on an actual use situation and is not limited herein.

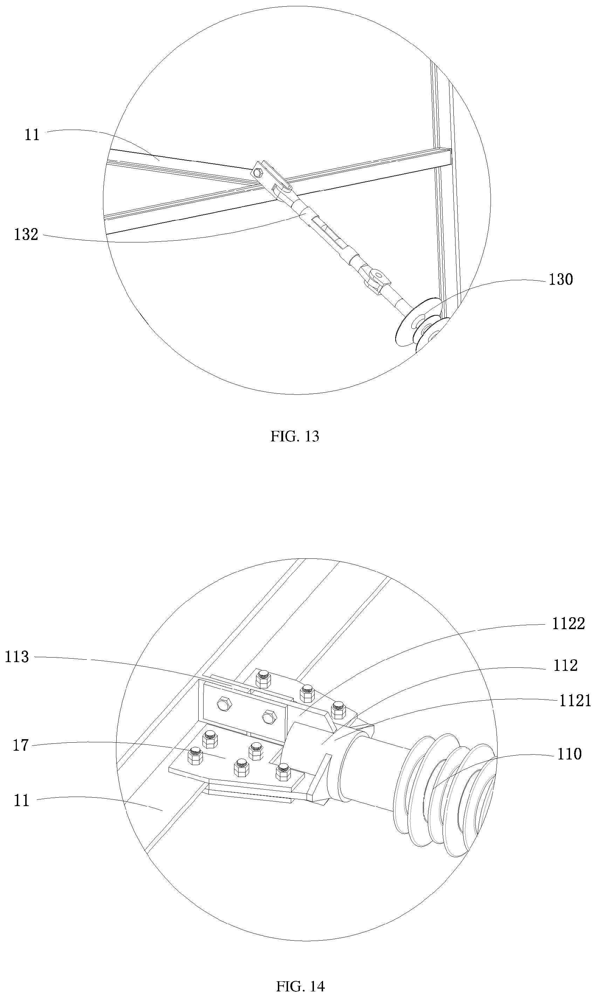

In another embodiment, with reference to FIG. 13 and FIG. 14, the low-voltage end 130a of the suspension insulator 130 is provided with a second suspension connecting fitting 132 for being connected to the tower body 11. The second suspension connecting fitting 132 includes a turnbuckle and a Z-shaped attaching plate. Certainly, the second suspension connecting fitting 132 may be other connecting fittings or a combination of a plurality of connecting fittings as long as the connection between the suspension insulator 130 and the tower body 11 can be realized.

The low-voltage end 110a of the post insulator 110 is provided with an end flange 112 for being connected to the tower body 11. The end flange 112 includes an end flange cylinder 1121 and an end flange plate 1122. The end flange cylinder 1121 is sleeved on an end portion of the post insulator 110. At least two, for example, two, four or more, end flange plates 1122 are provided. A plate surface of the end flange plate 1122 is arranged along an axial direction of the post insulator 110. The at least two end flange plates 1122 are spaced apart along a circumferential direction of the end flange cylinder 1121 and connected to the end flange cylinder 1121. The at least two end flange plates 1122 are configured to connect a respective one of the post insulators 110 and the tower body 11, so as to ensure connecting strength of the post insulator 110 and the tower body 11.

Still referring to FIG. 13 and FIG. 14, in order to further ensure the connecting strength of the post insulator 110 and the tower body 11, a plurality of tower body connecting plates 113 are further arranged on the tower body 11. The tower body connecting plates 113 have a plate-shaped structure and are fixedly connected to angle steel of the tower body 11. Each end flange plate 1122 on the post insulator 110 is fixedly clamped at one end of a plurality of sets of clamping plates 17, and each tower body connecting plate 113 is fixedly clamped at another end of the plurality of sets of clamping plates 17, so that the end flange plates 1122 and the tower body connecting plates 113 are clamped between the plurality of sets of clamping plates 17 and are connected by corresponding matched connectors, so that the post insulator 110 and the tower body 11 are connected to each other.

In an application scenario, as shown in FIG. 14, four end flange plates 1122 are provided, the adjacent end flange plates 1122 are arranged perpendicular to each other. Correspondingly, four tower body connecting plates 113 are provided, and four sets of clamping plates 17 are provided.

Still referring to FIG. 14, the end flange plate 1122, the clamping plate 17 and the tower body connecting plate 113 are provided with through holes respectively that are matched with each other, so that the post insulator 110 and the tower body 11 are fixedly connected together by fasteners passing through the through holes.

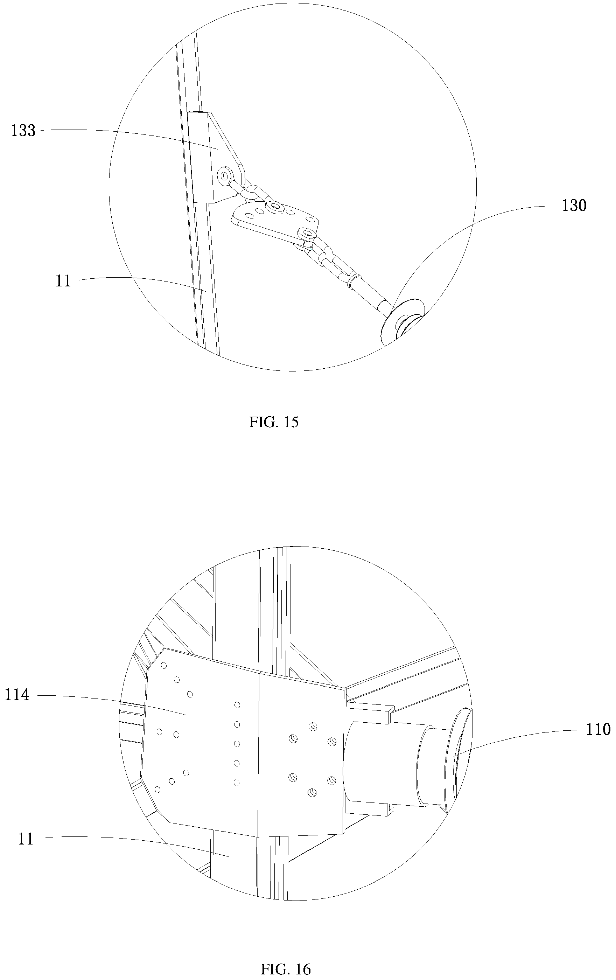

In still another embodiment, referring to FIG. 15 and FIG. 16, the low-voltage end 130a of the suspension insulator 130 may be connected to the tower body 11 by means of a first plate-type metal member 133. The low-voltage end 110a of the post insulator 110 may be connected to the tower body 11 by means of a second plate-type metal member 114. The first plate-type metal member 133 and the second plate-type metal member 114 may be fixedly connected to the tower body 11 by welding, or by bolt-nut fitting connection, or the like.

In this embodiment, still referring to FIG. 1 and FIG. 4, two composite crossarms 100 are arranged at a same height on the tower body 11. The two composite crossarms 100 are distributed axisymmetrically with respect to an axis of the tower body 11. The two composite crossarms 100 have axes located on a same straight line and thus form a composite crossarm assembly. Six composite crossarm assemblies are sequentially arranged on the tower body from top to bottom to form twelve end portions for attaching the conductors, so that the transmission tower 10 can be configured to attach four-circuit conductors. That is, the transmission tower 10 is a tower carrying four circuits. Compared with a conventional iron crossarm, the composite crossarm applied to a transmission line with four circuits on the same tower in this embodiment can highly effectively reduce the width of the line corridor, greatly reduce the height of the tower, improve the transmission capacity of the tower body, strengthen line reliability and is of great significance for a development of a transmission project.

In other embodiments, different numbers of composite crossarms can be correspondingly arranged on the tower body according to different conductor attaching requirements. For example, in another embodiment, three composite crossarm assemblies are sequentially arranged on the tower body of the transmission tower from top to bottom to form six end portions for attaching the transmission line, so that the transmission tower can be configured to attach a two-circuit transmission line, that is, the transmission tower is a tower carrying two circuits.

Certainly, a single-circuit transmission line can be attached on the transmission tower, and in this case, three conductors need to be attached. One composite crossarm assembly is arranged on the tower body to form two end portions for attaching the conductors. In addition, one composite crossarm is arranged on the tower body to attach a third-phase conductor, so that conductor attaching forms such as a single-circuit triangular arrangement or a single-circuit arrangement shaped like a Chinese character " 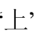 " can be formed to attach three-phase conductors, thereby meeting single-circuit conductor attaching requirements of the transmission tower.

In this embodiment, still referring to FIG. 1 and FIG. 4, composite crossarms 100 with different voltage levels are sequentially arranged on the tower body 11 from top to bottom. That is, the transmission tower 10 is a tower carrying circuits of mixed voltage levels, to attach the transmission lines with different voltage levels. The composite crossarms 100 with different voltage levels have different sizes, and the specific sizes thereof can be designed according to the voltage level of the attached transmission line. The composite crossarm tower carrying multiple circuits of mixed voltage levels can improve the transmission capacity, shorten the width of the corridor and save an occupied area.

In other embodiments, the transmission tower may be configured as a tower carrying circuits of a same voltage level. That is, composite crossarms with the same voltage level are sequentially arranged on the tower body from top to bottom to attach transmission lines with the same voltage level. The composite crossarms with the same voltage level have the same size.

The present application has the following beneficial effects: different from the prior art, the transmission tower according to the present application includes the at least one post insulator, the high-voltage end of the post insulator is provided with the end fitting, the end fitting is provided with one conductor attaching point for attaching one-phase conductor, and at least six composite crossarms are provided to form at least six conductor attaching points for attaching at least two-circuit conductors, so that the following technical effects can be achieved: 1) insulator strings are saved, wind deflection flashover are avoided, and the width of the line corridor is reduced; 2) a spacing between the layers of conductors is reduced, a size of a tower head is reduced, and electric field distribution and an electromagnetic environment of the support are improved; 3) a load effect of the conductor and a wind load on the tower head are reduced, and a tower weight and a foundation acting force are reduced; 4) an icing degree and a wind-exposed area of the transmission support are reduced, and a risk of the support collapse accidents is reduced.

The above description only illustrates embodiments of the present application and is thus not intended to limit the scope of the present application, and equivalent structure or equivalent flow transformations made by virtue of the description and drawings of the present application, or direct or indirect applications to other related arts shall similarly fall within the scope of protection of the present application.

## Claims

1. A transmission tower, comprising a tower body and a composite crossarm arranged on the tower body, wherein the composite crossarm comprising at least one post insulator, a low-voltage end of the at least one post insulator being connected to the tower body, a high-voltage end of the at least one post insulator being provided with an end fitting, the end fitting being provided with a conductor attaching point configured for attaching one-phase conductor, and wherein at least six composite crossarms are provided to form at least six conductor attaching points for attaching at least two-circuit conductors.

2. The transmission tower according to claim 1, wherein the end fitting is provided with a conductor attaching portion; and wherein the conductor attaching portion is connected to a conductor attaching fitting string and configured to form the conductor attaching point.

3. The transmission tower according to claim 2, wherein the composite crossarm further comprises at least one suspension insulator, wherein a high-voltage end of the at least one suspension insulator is fixedly connected to the high-voltage end of the at least one post insulator through the end fitting, and a low-voltage end of each of the at least one suspension insulator is fixedly connected to the tower body above a respective one of the at least one post insulator.

4. The transmission tower according to claim 3, wherein the end fitting comprises:
a flange cylinder configured as a hollow structure in its axial direction and sleeved on the high-voltage end of the at least one post insulator; and
a sealing plate sealing an end portion of the flange cylinder away from the at least one post insulator.

5. The transmission tower according to claim 4, wherein the conductor attaching portion is a conductor attaching hole, and the conductor attaching hole is formed in the sealing plate and configured to be connected with the conductor attaching fitting string.

6. The transmission tower according to claim 4, wherein the conductor attaching portion is a plate member structure; the conductor attaching portion is perpendicularly arranged on a plate surface of the sealing plate away from the flange cylinder; and a conductor attaching hole is formed in the conductor attaching portion and configured to be connected with the conductor attaching fitting string.

7. The transmission tower according to claim 4, wherein the conductor attaching portion is a plate member structure; the conductor attaching portion is perpendicularly arranged on a plate surface of the sealing plate adjacent to the flange cylinder and also connected to an outer circumferential surface of the flange cylinder; and a conductor attaching hole is formed in the conductor attaching portion and configured to be connected with the conductor attaching fitting string.

8. The transmission tower according to claim 4, wherein the end fitting further comprises a connector, wherein the connector is located on an outer circumferential surface of the flange cylinder and configured to be connected to the at least one suspension insulator.

9. The transmission tower according to claim 3, further comprising:
a connecting lug fixed on the tower body, and the low-voltage end of a respective one of the at least one suspension insulator being connected to the connecting lug through a first suspension connecting fitting and connected to the tower body;
a tower body flange cylinder fixed on the tower body; and
a tower body flange plate, one end of the tower body flange plate being connected to the tower body flange cylinder, and another end of the tower body flange plate being in butt connection to a flange plate arranged at the low-voltage end of the at least one post insulator, so as to connect the at least one post insulator and the tower body.

10. The transmission tower according to claim 1, wherein the high-voltage end of the at least one post insulator is further provided with a grading ring; and the grading ring is connected to the end fitting.

11. The transmission tower according to claim 3, wherein the composite crossarm comprises two post insulators and two suspension insulators, wherein the two suspension insulators are located on a same side of the two post insulators and are respectively adjacent to the two post insulators, an included angle between the two post insulators ranges from 20° to 50°, and an included angle between each post insulator and an adjacent one of the suspension insulators ranges from 15° to 45°.

12. The transmission tower according to claim 11, wherein the end fitting comprises:
a post connecting plate provided with a post connecting hole and configured to be connected to the post insulators;
a suspension connecting plate located on the post connecting plate and configured to be connected to a respective one of the suspension insulators; and
a reinforcing member connected to both the post connecting plate and the suspension connecting plate.

13. The transmission tower according to claim 12, wherein the reinforcing member is a plate member structure, and the post connecting plate is arranged perpendicular to the reinforcing member.

14. The transmission tower according to claim 12, wherein the reinforcing member is cylindrical, and a side edge of the post connecting plate abuts against an outer circumferential surface of the reinforcing member.

15. The transmission tower according to claim 11, wherein the low-voltage end of each of the suspension insulators is connected to the tower body through a second suspension connecting fitting, the low-voltage end of each of the post insulators is provided with an end flange, wherein the end flange comprises an end flange cylinder that is sleeved on an end portion of a respective one of the post insulators and at least two end flange plates; and wherein the at least two end flange plates are spaced apart along a circumferential direction of the end flange cylinder and connected to the end flange cylinder, and configured to connect the respective one of the post insulators and the tower body.

16. The transmission tower according to claim 1, wherein two composite crossarms are arranged at a same height on the tower body, the two composite crossarms are distributed axisymmetrically with respect to an axis of the tower body; the two composite crossarms have axes located on a same straight line to form a composite crossarm assembly; and three composite crossarm assemblies are sequentially arranged on the tower body from top to bottom to attach two-circuit conductors.

17. The transmission tower according to claim 1, wherein two composite crossarms are arranged at a same height on the tower body, the two composite crossarms are distributed axisymmetrically with respect to an axis of the tower body; the two composite crossarms have axes located on a same straight line to form a composite crossarm assembly; and six composite crossarm assemblies are sequentially arranged on the tower body from top to bottom to attach four-circuit conductors.

18. The transmission tower according to claim 1, wherein the transmission tower is a tower carrying circuits of a same voltage level, and composite crossarms with a same voltage level are sequentially arranged on the tower body from top to bottom to attach transmission lines with a same voltage level.

19. The transmission tower according to claim 1, wherein the transmission tower is a tower carrying circuits of mixed voltage levels, and composite crossarms with different voltage levels are sequentially arranged on the tower body from top to bottom to attach transmission lines with different voltage levels.

20. The transmission tower according to claim 1, wherein the tower body is an angle steel tower or a steel pipe pole.
